# DEMANDE DE BREVET EUROPEEN

(11) **EP 0 710 828 A1**
(43) Date de publication de la demande: **08.05.1996**
(21) Numéro de dépôt: 95402464.2
(22) Date de dépôt: 03.11.1995
(51) Int. Cl.: G01N 1/20

(54) **Dispositif d'analyse d'un produit, notamment pulvérulent, contenu dans un récipient, et installation de production correspondante**

(30) Priorité: 07.11.1994 FR 19940013325
(71) Demandeur: Weber et Broutin France, F-77253 Brie Comte Robert Cedex (FR)
(72) Inventeur: Dietz, Bernadette, F-01600 Parcieux (FR); Lambert, Marc, F-77600 Bussy Saint-Georges (FR); Husson, Sophie, F-01290 Saint-André d'Huiriat (FR); Pezerat, André, F-01240 Saint-André le Bouchoux (FR)
(74) Mandataire: Jacobson, Claude, et al

(57) **Abrégé**

Ce dispositif d'analyse comprend :
- un analyseur (9) relié à un ordinateur et muni d'une fenêtre de visée;
- un hublot monté devant la fenêtre et constitué d'un matériau qui ne se raye pas au contact du produit à analyser, notamment de saphir synthétique ou de rubis synthétique;
- une chambre d'analyse (16) à axe vertical montée au-dessus du hublot, cette chambre formant un entonnoir dans lequel débouche tangentiellement un tuyau (33; 37) relié à une source d'air comprimé (10) ou à un aspirateur (38) ; et
- des moyens (34) d'amenée d'un échantillon du produit contenu dans le récipient dans la chambre d'analyse (16).

Application à l'analyse en ligne de produits pulvérulents destinés à la réalisation de mortiers industriels.

## Description

La présente invention est relative à un dispositif d'analyse d'un produit, notamment pulvérulent, contenu dans un récipient.

De façon classique, les lignes de production de produits pulvérulents comportent des moyens de prélèvement d'échantillons, qui sont envoyés à des laboratoires pour analyse. Comme il n'est pas possible d'arrêter la production pendant que s'effectue l'analyse, on comprend que si celle-ci révèle que les caractéristiques de l'échantillon s'écartent trop des caractéristiques désirées, cette technique peut conduire à des pertes importantes de produit.

L'invention a pour but de permettre, de manière économique et fiable, de connaître très rapidement les résultats de l'analyse.

A cet effet, l'invention a pour objet un dispositif d'analyse comprenant :
- un analyseur relié à un ordinateur et muni d'une fenêtre de visée;
- un hublot constitué d'un matériau qui ne se raye pas au contact du produit à analyser, notamment de saphir synthétique ou de rubis synthétique;
- une chambre d'analyse à axe vertical montée au-dessus du hublot, cette chambre formant un entonnoir dans lequel débouche tangentiellement un tuyau relié à une source d'air comprimé ou à un aspirateur; et
- des moyens d'amenée d'un échantillon du produit contenu dans le récipient dans la chambre d'analyse, en continu ou de façon intermittente.

Le dispositif d'analyse suivant l'invention peut comporter une ou plusieurs des caractéristiques suivantes :
- la chambre d'analyse est reliée en permanence au récipient par une conduite et est alimentée par simple gravité via cette conduite;
- ladite conduite est munie d'une vanne d'arrêt;
- la vanne d'arrêt est une vanne d'étranglement d'un tronçon souple de ladite conduite;
- la chambre d'analyse est reliée à un corps de guidage d'un organe mobile de prélèvement de l'échantillon et de transfert de ce dernier dans la chambre;
- l'analyseur comporte des moyens pour retrancher du signal obtenu lors de l'analyse le signal correspondant au hublot seul, obtenu par étalonnage préalable;
- l'analyseur comporte un capot extérieur muni de moyens de mise en surpression et de balayage par un gaz, notamment par de l'air comprimé.

L'invention a également pour objet une installation de production d'un produit, notamment pulvérulent, comprenant un récipient de mélange, de stockage et/ou de transport du produit, et un dispositif d'analyse telle que défini ci-dessus, associé à ce récipient.

Des exemples de réalisation de l'invention vont maintenant être décrits en regard des dessins annexés, sur lesquels :
- la Figure 1 représente schématiquement une installation de production de produit pulvérulent conforme à l'invention;
- la Figure 2 représente schématiquement, à plus grande échelle, une partie de cette installation, partiellement prise en coupe suivant la ligne Il de la Figure 1;
- la Figure 3 représente schématiquement, partiellement en coupe, une partie d'une autre installation suivant l'invention; et
- la Figure 4 est une vue éclatée de la chambre d'analyse des installations des Figures 2 et 3.

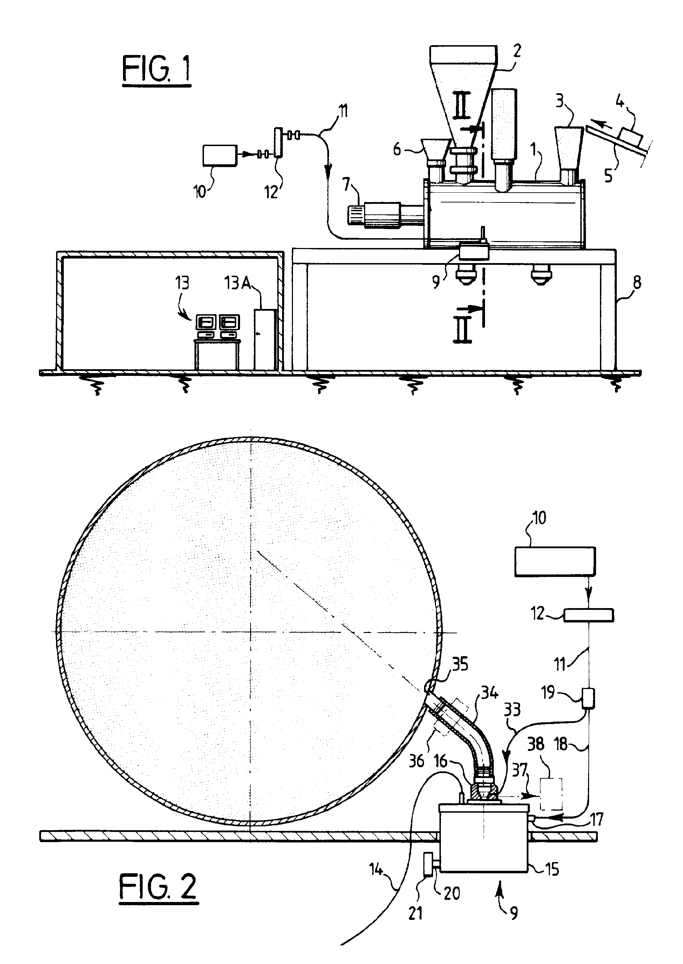

L'installation représentée à la Figure 1 est destinée à produire par charges successives un produit pulvérulent à plusieurs constituants destiné à la réalisation d'un mortier industriel pour le bâtiment. Cette installation comprend essentiellement un mélangeur 1, de forme générale cylindrique à axe horizontal, qui est relié à plusieurs trémies :
- une trémie principale 2 dans laquelle sont déversées automatiquement les matières premières principales préalablement pesées;
- une trémie 3 de réception d'additifs préalablement pesés, amenés par des chariots 4 grâce à un convoyeur 5; et
- une trémie 6 d'ajout manuel de certains constituants, afin d'ajuster la composition du produit

Le mélangeur contient des organes de malaxage entraînés en rotation par un moto-réducteur 7, et il est monté sur un bâti 8. Il est par ailleurs associé à un dispositif d'analyse 9 relié d'une part à une source 10 d'air comprimé, via une conduite 11 équipée d'un purificateur d'air 12, et d'autre part à un ordinateur 13, via un câblage 14 (Figure 2).

Comme on le voit plus en détail sur la Figure 2, le dispositif d'analyse 9 est enfermé dans un capot protecteur 15 sur la face supérieure duquel est montée une chambre d'analyse 16, située en regard d'une fenêtre de visée du dispositif 9. Latéralement, ce capot 15 comporte dans sa partie supérieure un raccord 17 d'entrée d'air de balayage, relié via une conduite 18 et un raccord 19 à la conduite 11, et dans sa partie inférieure un tuyau de sortie 20 muni d'un filtre 21. Le dispositif 9 est un spectromètre P.I.R. (Proche Infra-Rouge) qui peut être du type INFRAALYSER 450 ou 600 de la Société BRAN et LUEBBE. L'électronique de commande de ce spectromètre est interfacée avec l'ordinateur 13, lequel est relié à un ordinateur de production et à un automate programmable 13A associé à ce dernier. L'ordinateur 13, par exemple du type PC, comporte un disque dur sur lequel sont enregistrées des données spectrales correspondant à un certain nombre de longueurs d'onde, ainsi que les données du processus de fabrication.

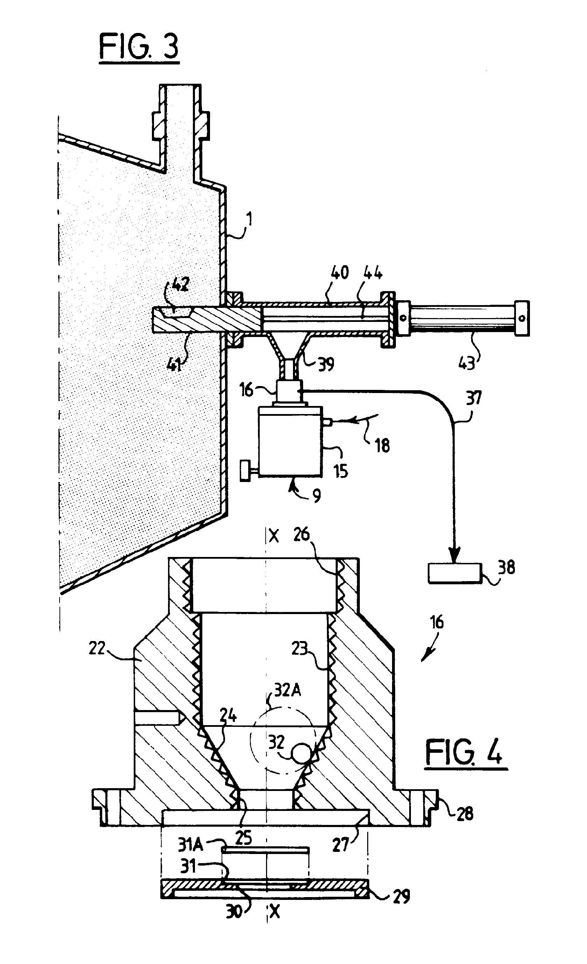

La chambre 16, d'axe vertical X-X, est représentée plus en détail sur la Figure 4. Elle comprend un corps principal 22 dans lequel est usiné un alésage cylindrique 23 qui se prolonge vers le bas par un entonnoir tronconique 24 puis par un conduit cylindrique 25. Un lamage 26 est prévu à l'extrémité supérieure de l'alésage 23, et un lamage 27 est prévu à l'extrémité inférieure du conduit 25. Les surfaces usinées le sont avec précision, à l'état poli. Le corps 22 comporte par ailleurs à sa base une bride 28 de fixation sur le dispositif 9.

Dans le lamage 27 s'ajuste avec précision un disque 29 dont l'ouverture centrale 30 est contre-alésée en 31 dans sa partie supérieure. Une pastille 31 A réalisée en une matière qui ne se raye pas au contact du matériau à analyser, notamment en saphir synthétique (ou, en variante, en rubis synthétique), s'ajuste exactement dans le contre-alésage 31.

On a également représenté sur la Figure 4 un orifice 32 d'entrée d'air comprimé de vidange, qui débouche tangentiellement dans l'entonnoir 24. Comme on le voit sur la Figure 2, la conduite 33 qui alimente l'orifice 32 est elle-même reliée à la conduite 11 via le raccord 19.

De plus, il est prévu un tuyau coudé 34 en chlorure de polyvinyle (PVC) armé, dont l'extrémité inférieure est reliée au lamage 26, tandis que son extrémité supérieure est reliée à une ouverture 35 du malaxeur 1 située au-dessous du plan diamétral de celui-ci et inclinée à environ 45°. Ce tuyau 34 met en communication en permanence la chambre 16 et l'intérieur du malaxeur.

Le fonctionnement est le suivant.

Lorsqu'on désire analyser le produit contenu dans le malaxeur, on envoie de l'air comprimé dans la conduite 33. Ce gaz évacue totalement, avec effet vortex, la chambre 16 et le tuyau 34, dont les contenus retournent dans le malaxeur. Lorsqu'on coupe l'arrivée d'air comprimé, la chambre 16 et le tuyau 34 se remplissent par simple gravité du produit contenu dans le malaxeur. Eventuellement, pour plus de sécurité, on peut répéter cette opération de purge deux ou plusieurs fois.

Le dispositif 9 envoie alors à travers le hublot 32 une série de rayons lumineux de différentes longueurs d'onde du spectre P.I.R., et il envoie à l'ordinateur 13 des signaux représentatifs des rayons rétrodiffusés. Comme le spectre P.I.R. est déformé par l'absorbance variable, suivant la longueur d'onde, du hublot en saphir synthétique, on peut prévoir que l'ordinateur effectue une correction des signaux reçus pour retrouver, par différence entre le spectre brut obtenu et celui, obtenu par étalonnage, correspondant au hublot seul, le spectre P. I.R. réel du produit analysé. Le spectre, brut ou corrigé, peut être traité par l'Analyse Discriminante D² de MA-HALANOBIS 1 er et 2ème VOISIN, pour vérifier la conformité des produits.

In est à noter que le capot 15 du dispositif 9 est en permanence balayé et maintenu sous une légère surpression par de l'air comprimé purifié, pour protéger des poussières les organes qu'il renferme.

Dans le contexte considéré, un échantillonnage toutes les 35 secondes s'est révélé satisfaisant, la vitesse d'analyse étant largement suffisante.

On a encore illustré en traits mixtes à la Figure 2 une variante du dispositif d'analyse. Le tuyau 34 comporte un tronçon en élastomère entouré par une vanne d'arrêt 36 capable de l'étrangler, et la conduite 33 est remplacée par un tuyau d'aspiration 37 relié à un aspirateur 38. Comme on le voit sur la Figure 4, le tuyau 37 débouche également tangentiellement dans l'entonnoir 24, par un orifice 32A de diamètre très supérieur à celui de l'orifice 32.

Dans cette variante, avant chaque analyse, la vanne 36 ferme le tuyau 34, et le contenu de ce tuyau et de la chambre 16 est évacué par aspiration avec effet vortex. Si nécessaire, on peut effectuer un deuxième cycle ouverture de la vanne 36-fermeture de cette vanne-aspiration, pour garantir le remplacement total du produit antérieurement analysé par le nouveau produit à analyser.

Dans le mode de réalisation de la Figure 3, on a de nouveau recours à une vidange de la chambre d'analyse par aspiration, mais celle-ci n'est plus en communication permanente avec le récipient 1 contenant le produit analysé, lequel, dans cet exemple, est un silo de stockage à axe vertical.

Au contraire, la partie supérieure de la chambre 16 est reliée, via une trémie 39, à un cylindre horizontal 40 dans lequel coulisse à joint étanche un tiroir 41 comportant une cuillère de prélèvement 42. A une extrémité, le cylindre 40 est fixé autour d'une ouverture prévue dans la paroi latérale du silo; à son autre extrémité, il est fixé au corps d'un vérin 43 de translation et de rotation, dont la tige de piston 44 est reliée au tiroir 41.

Pour effectuer une analyse, après avoir vidé la chambre 16, le tiroir 41 est enfoncé dans le silo, puis rétracté. Ceci amène la cuillère 42 au-dessus de la trémie 39. Le vérin assure alors la rotation d'un demi-tour du tiroir, de sorte que le produit est déversé dans la chambre 16. L'analyse se poursuit ensuite comme précédemment.

Comme on le comprend, le dispositif de prélèvement 40 à 44 pourrait, en variante, être remplacé par d'autres types de dispositifs, tel qu'un extracteur à vis sans fin, à bande transporteuse, etc.

Comme on le comprend, lorsque la vidange de la chambre d'analyse s'effectue par aspiration, il est souhaitable de prévoir une entrée d'air munie d'un filtre en amont de cette chambre.

## Revendications

1. Dispositif d'analyse d'un produit, notamment pulvérulent, contenu dans un récipient (1), **caractérisé en ce qu'**il comprend :
- un analyseur (9) relié à un ordinateur (13) et muni d'une fenêtre de visée;
- un hublot (31A) monté devant la fenêtre et constitué d'un matériau qui ne se raye pas au contact du produit à analyser, notamment de saphir synthétique ou de rubis synthétique;
- une chambre d'analyse (16) à axe vertical (X-X) montée au-dessus du hublot (31A), cette chambre formant un entonnoir (24) dans lequel débouche tangentiellement un tuyau (33; 37) relié à une source d'air comprimé (10) ou à un aspirateur (38); et
- des moyens (34; 41 à 44) d'amenée d'un échantillon du produit contenu dans le récipient dans la chambre d'analyse (16), en continu ou de façon intermittente.

2. Dispositif suivant la revendication 1, **caractérisé en ce que** la chambre d'analyse (16) est reliée en permanence au récipient (1) par une conduite (34) et est alimentée par simple gravité via cette conduite.

3. Dispositif suivant la revendication 2, **caractérisé en ce que** ladite conduite (34) est munie d'une vanne d'arrêt (36).

4. Dispositif suivant la revendication 3, **caractérisé en ce que** la vanne d'arrêt (36) est une vanne d'étranglement d'un tronçon souple de ladite conduite (34).

5. Dispositif suivant la revendication 1, **caractérisé en ce que** la chambre d'analyse (16) est reliée à un corps (40) de guidage d'un organe mobile (41) de prélèvement de l'échantillon et de transfert de ce dernier dans la chambre.

6. Dispositif suivant l'une quelconque des revendications 1 à 5, **caractérisé en ce que** l'analyseur (9) comporte des moyens pour retrancher du signal obtenu lors de l'analyse le signal correspondant au hublot seul, obtenu par étalonnage préalable.

7. Dispositif suivant l'une quelconque des revendications 1 à 6, **caractérisé en ce que** l'analyseur (9) comporte un capot extérieur (15) muni de moyens (17, 18) de mise en surpression et de balayage par un gaz, notamment par de l'air comprimé.

8. Installation de production d'un produit, notamment pulvérulent, comprenant un récipient (1) de mélange, de stockage et/ou de transport du produit, et un dispositif d'analyse (9) suivant l'une quelconque des revendications 1 à 7, associé à ce récipient.
